# EUROPEAN PATENT APPLICATION

(11) **EP 2 294 931 A1**
(43) Date of publication of application: **16.03.2011**
(21) Application number: 09169271.5
(22) Date of filing: 02.09.2009
(51) Int. Cl.: A23L 1/221, C11B 9/02, B01D 3/04, B01D 3/38, B01D 5/00

(54) **Improved process and improved apparatus for yielding plant ingredients**

(71) Applicant: Drom Fragrances GmbH & Co. KG, 82065 Baierbrunn (DE)
(72) Inventor: Rinder, Rudolf, 85356, Freising (DE)
(74) Representative: Koepe & Partner

(57) **Abstract**

A process and apparatus for yielding one or several plant ingredient(s) from plants by steam/water vapour distillation, said apparatus comprising a steam generation unit (2), a distillation still (6), a head (9) of the distillation still (6) provided with a thermometer (10), a condenser (11) and a receiving vessel (12) for collecting the plant ingredient(s) obtained; wherein
- said distillation still (6) has a ratio of diameter (D) to height (H) in the range of from 1 : 25 to 1 : 2;
- said head (9) of the distillation still (6) is connected to the condenser (11) via an ascending pipe (20) and a bridge (21), wherein the head (9) of the distillation still (6), the ascending pipe and the bridge (21) are provided on their inner walls facing the uprising steam with a surface having recesses, whereby the flow of steam is guided through the head (9) of the distillation still (6), the ascending pipe (20) and the bridge (21) on micro-turbulences; and
- the condenser (11) is a balloon condenser (11) having arranged at least three balloons in a descending direction.

## Description

The present invention relates to a process and an apparatus, both improved, compared to the prior art, for gently yielding plant ingredients, particularly for gently yielding plant ingredients in a pure form and in a form free of decomposition products, secondary products and/or undesired components, for example a process and an apparatus for simultaneously yielding flavour-active components of flavours of vegetable origin. In the sense of the present invention, flavour-active plant components may particularly preferably be highly volatile monoterpenes and their derivatives (alcohols, aldehydes, ketones, esters, etc.) and aroma-related phenyl propane compounds. The present invention particularly relates to a process and to an apparatus for a genuine recovery of plant ingredients (in the sense of a yielding process close to an ecologic process under physiological conditions).

Since a long time, yielding plant ingredients in a simple way is an aim of making use of natural reproductive resources by humans. In particular, it was desired to yield plant ingredients in a pure form. This was desired - to name only two of many examples - for yielding flavours from plants for the perfume industry in the same way as for yielding aromatics for the food industry. In the industry of yielding flavours, preferably the oxidized monoterpenes (alcohols, aldehydes, ketones, esters, etc.) and the oxidized sesquiterpenes (alcohols, aldehydes, ketones, esters, etc.) are used. Specifically requested are those components (depending upon the chemotype, upon the habitat, upon the hereditary disposition and upon the degree of ripeness) which are available in the highest-possible purity and in a composition as genuine and close to the culture as possible.

A common problem of all such attempts of yielding plant ingredients was that the desired substances are often not easily separated from the plant raw material (leaves, fruits, stems, seeds, blossoms, roots, etc.). Moreover, the desired substances, once separated from their natural environment (leaf, fruit, stem, seed, blossom, root), sometimes relatively rapidly undergo changes under the conditions which have to be selected for their recovery and, optionally, suffer from a non-acceptable loss of quality or even become useless or are destroyed completely. Such "decay reactions" of the substances which include a thermal decomposition, an oxidative decay, auto-oxidation processes in the presence of transition metal cations, a decay induced by light/radiation, or - in the case of esters - a trans-esterification, acetylation and saponification (optionally under the influence of tannic acids) are undesired, naturally, and severely restrict the selection of processes available for their production.

A further problem of the prior art was that, for several steps of yielding such plant ingredients, there were available methods and also devices which provided acceptable result in the laboratory scale. However, such processes (as well as the devices used for conducting such processes) could not be converted, or could only insufficiently be converted, to a technical scale or even to a scale for industrial use. In particular, for processes for producing sensitive, i.e. easily thermally decomposable or oxidatively decayable, plant ingredients, this was a problem which could sometimes not be solved. To give just one example: Flavour substances volatile in steam, as e.g. essential oils, may be produced from plants by steam distillation upon fresh or withered plants. In larger devices for said purpose, there is however, a problem of a local overheating close to the source of heat which resulted in undesired side flavours. In order to avoid their generation, the temperature had to be reduced, which step resulted in undesired long distillation times. It was an object which, however, could not be achieved up to now to provide methods and devices which could, without problems, be converted from a laboratory scale to larger scales and which provided results free from the problems of the prior art.

Moreover, there was a long-felt need for a method and a device for producing plant ingredients which are sufficiently mobile to employ them in the fields, i.e. at the place of cultivating plants. This was desired in order to rapidly and without a major equipment check minor badges of a certain type of plant in the fields, for example with respect to their degree of ripeness which may be recognized from their components. To give just an example: The content of the major components of the oil of the peppermint plant (menthone, menthofurane, menthol, pulegone and menthyl acetate) changes in the course of the harvesting period, and the time of harvesting the peppermint plants with a certain predetermined composition of the above-mentioned components may be optimized by means of a rapid analysis of the peppermint oil obtained therefrom. In cases where a too long time period passes between sampling, processing, recovering and analyzing the sample (as it happened in methods and with devices of the prior art), for example time for transporting the sample into the laboratory, the values were tampered and were expressive for determining the harvesting time only to a restricted extent or even were not reliable.

Thus, there was a need for yielding partly highly reactive plant ingredients or their components, respectively, in a genuine composition close to the physiologic composition. Moreover, the possibility of a quality check at a location close to the habitat of the plant was desired.

The term "genuine" or "close to the physiological situation", as used in the specification and claims, is considered to mean the composition of one or several plant ingredient(s), particularly of one or several essential oil(s), as it is/they are present in the plant and/or in parts of the plant under physiological conditions, without that any change in the ratio of components or in their structure is occurring or even actively performed after the recovery as a consequence of the production process. With the aim of avoiding changes of the nature of the components in the course of the production, it was the major object of the invention to ensure that relevant process parameters are strictly observed and reproducibly maintained, as for example time of harvest, treatment after harvesting, transport and storage conditions, water content, vapour pressure and vapour amount, pH value, water content, distillation time range as well as steam saturation.

In accordance with the invention, it was another object that intentional changes of the composition of the plant ingredients and their components be excluded. In products presently available commercially, changes are made intentionally sometimes, e. g. by the addition of spirits or turpentine, the blending with fat oils, alcohols and synthetic oils, the dilution with thinners, the blending with lower-price essential oils of the same plant harvested in another habitat, the blending with lower-price essential oils of the same plant, but yielded from another part of the plant, the blending with low-price essential oils yielded from plants of the same family, the blending with low-price essential oils yielded from other plants, or the blending with isolated natural or synthetic flavours, such listing of intentional changes of the composition of plant ingredients after the production process not being exhaustive.

In accordance with the needs, the process for yielding plant ingredients ecologically has to run always along the same principles. A particularly preferable feature was considered to be the automatic match of the steam with the conditions in the distillation still without the necessity of a permanent control or additional manipulation. On this route, a standardization of fixed, predetermined and experimentally secured process parameters may be obtained. As a consequence and in contrast to the present availability on the market, a genuine natural product can be obtained under reproducible conditions and in accordance with the genotype, chemotype and degree of ripeness of the plant.

For achieving the object so far posed, the document DE-A 198 04 010 (title: Apparatus and Process for Yielding Plant Ingredients) discloses a process and an apparatus for yielding one or several plant ingredient(s) from plants and/or parts of plants by water vapour / steam distillation, which process comprises the steps of (i) contacting an amount of plants and/or parts of plants previously measured and arranged in the form layers with steam of a defined flow rate at a pressure in the range of low sub-atmospheric pressure to low supra-atmospheric pressure; (ii) condensing water to the plants and/or parts of said plants by said contact of the steam to the relatively cooler plants and/or parts of said plants; (iii) dissolving and/or suspending, in said condensed water, one or several plant ingredient(s) from said plants and/or parts of said plants; (iv) heating the solution and/or suspension comprising water and one or more than one plant ingredient thus formed on said plants and/or parts of said plants by following amounts of steam, whereby said water and/or said dissolved or suspended plant ingredient(s) is/are evaporated at least partly; (v) condensing the steam thus formed to relatively cooler plants and/or parts of said plants arranged in a downstream flow direction of the steam and dissolving and/or suspending new plant ingredients, respectively, in water from steam condensed to said plants and/or parts of said plants; (vi) repeating the previous two steps, until the solution or suspension, respectively, containing said plant ingredient(s) is migrated through said plants and/or parts of said plants by alternating steps of evaporation and condensation; (vii) driving the solution and/or suspension removed from said layers of plants and/or parts of said plants by further steam to a condenser arranged in the downstream direction of flow of said steam; (viii) condensing the solution and/or suspension of said plant ingredient(s) and water in said condenser; and (ix) separating the condensate into water and one or more plant ingredient(s).

The process disclosed in the above prior art document was suitable for achieving the object of yielding, in a laboratory scale or in a semi-industrial scale, one or several plant ingredient(s) without the need to accept a change of the composition of the products, particularly a decay as a consequence of oxidation or influence of light. The process was also suitable to provide suitable results when determining the optimized point of time for the harvest by means of a distillation in the fields on a small distillation plant. However, further improvements were desired, particularly with respect to the gentle separation of sensitive components of plant ingredients from the plant or from the parts of plants, from which they are yielded ideally, as well as with respect to the gentle separation of several yielded volatile components from each other.

Hence, it was an object of the present invention to provide an improved process for yielding plant ingredients by which genuine natural ingredients, particularly flavour-active ingredients may be obtained gently in the purest-possible form by water vapour / steam distillation from fresh or withered plants and/or parts of plants rapidly and without large apparatus efforts. Particular emphasis should be attached to a gentle separation of several components of plant ingredients sufficiently complete for practical requirements so as to finally yield such components from plants and/or parts of plants in a purity as high as possible, after their extraction from the plant or its part(s). The latter feature was specifically requested by the industry dealing with yielding natural aromas and flavours and is an essential requirement for providing pure aromas and flavours.

Another object was the creation of a process for gently yielding plant components which may be conducted under well defined, reproducible conditions, which may be transferred to plants of a different scale. Furthermore, it was an object of the invention to create a process for yielding plant components which is adapted yield sensitive plant components in a gentle manner from freshly harvested or withered plants and/or parts of plants. Last, but not least, it was an object of the invention to provide a process for yielding plant components in a gentle manner and thereby allowing to establish a flavour profile of said plant component. For this reason, extended periods of extraction and distillation as well as reaction conditions unfavourable for the flavour-active components should be avoided as far as possible.

It was a further object of the present invention to provide an apparatus for yielding flavour-active plant ingredients from fresh and/or withered plants and/or parts of plants rapidly and without large apparatus efforts in a gentle manner. Moreover, it was an object of the invention to provide an apparatus for yielding plant components, which apparatus is sufficiently mobile for using it in the fields, i. e. close to the place of growth of the plant from which the plant components are to be obtained. In addition, it was an object of the present invention to provide an apparatus for yielding plant components the operation parameters of which, when yielding plant components, may be transferred to apparatus/plants of a different scale without problems and without major experimental efforts.

Hence, the present invention relates to a process for yielding one or more than one plant component from plants and/or parts of plants by water vapour / steam distillation in accordance with claim 1. Further embodiments of the process according to the invention are claimed in claims 2 to 11.

The present invention also relates to an apparatus for yielding one or more than one plant component from plants and/or parts of plants by water vapour / steam distillation in accordance with claim 12. Further embodiments of the apparatus according to the invention are claimed in claims 13 to 26.

In the frame of the present invention, plant components are obtained/yielded from a plant and/or a part or parts of said plant. The term "plant components" is understood to mean, in the present specification and claims, such chemical substances which are contained in a plant or in plants and/or in one part or several parts thereof, and which substances to yield is intended by the present invention for purposes of further using or further processing them. Such substances may be, for example, aroma substances, flavour substances, spice substances, or others. In accordance with the invention, the present process may be used for yielding one single plant component from a plant or from plants and/or from one part or several parts of a plant or of plants. However, it is also possible in a similar way to yield several plant components from a plant of from (a) part(s) thereof.

The term "flavour-active plant component", as used in the present specification and claims, is understood to comprise, in the frame of the present invention, such plant components which are selected from the group consisting of terpenes, particularly sesquiterpenes and their oxides, e.g. farnesol, damascon, lonon, etc; monoterpenes and their oxides, e. g. linalool, linalyl acetate, citral, citronellol, carotol, etc.; alcohols, aldehydes and esters, particularly carboxylic esters, e.g. allyl hexonate, butyl butyrate, benzyl acetate, bornyl acetate, estragol, ethyl heptonate, ethyl isovalerate, ethyllactate, etc. Further flavour-active plant components are - in an exemplary, but not exhausting or restricting enumeration - anethol, apiol, aromadendrene, benzyl benzoate, bisabolen, borneol, bornyl acetate, cadinene, caryophyllen, copaen, coriandrin, damascenone, daucol, elemicin, eugenol, farnesene, geraniol (in all its isomeric forms), geranyl acetate, germacren, lavendulyl acetate, alpha-humulene, trans-beta-quaiene, methyl butanol, methyl chavicol, methyl eugenol, myrcene, neryl acetate, Z-pentene-3-ol, sabinen hydrate, terpinen-4-ol, thymol, etc..

In the following,the invention is described in detail by referring to the attached Figures. In the Figures,
- Figure 1 shows the apparatus of the invention for yielding plant components;
- Figure 1a shows an apparatus for extraction by using organic solvents (ethanol) useable together with the apparatus shown in Figure 1 by combination of distillation, percolation, and maceration;
- Figure 1b shows an apparatus for extraction by using organic solvents (ethanol) useable together with parts of the apparatus shown in Figure 1 by percolation, and maceration;
- Figure 2 shows an apparatus for cooling and collecting a condensate, protecting the condensate with a noble gas, separating the condensate into water and one or more other component(s) and measuring the amount(s) of the other components, which apparatus is useable together with the apparatus shown in Figure 1;
- Figure 3 is a detailed sketch of the gooseneck pipe/head of the distillation vessel 9 with the bridge 21 located at the top end of the distillation still 6; all figures, measures and dimensions are exemplary, only; and
- Figure 4 is an exemplary mode of the action in steam stream controlling by the new surface profile with slots/pits resembling pin holes;

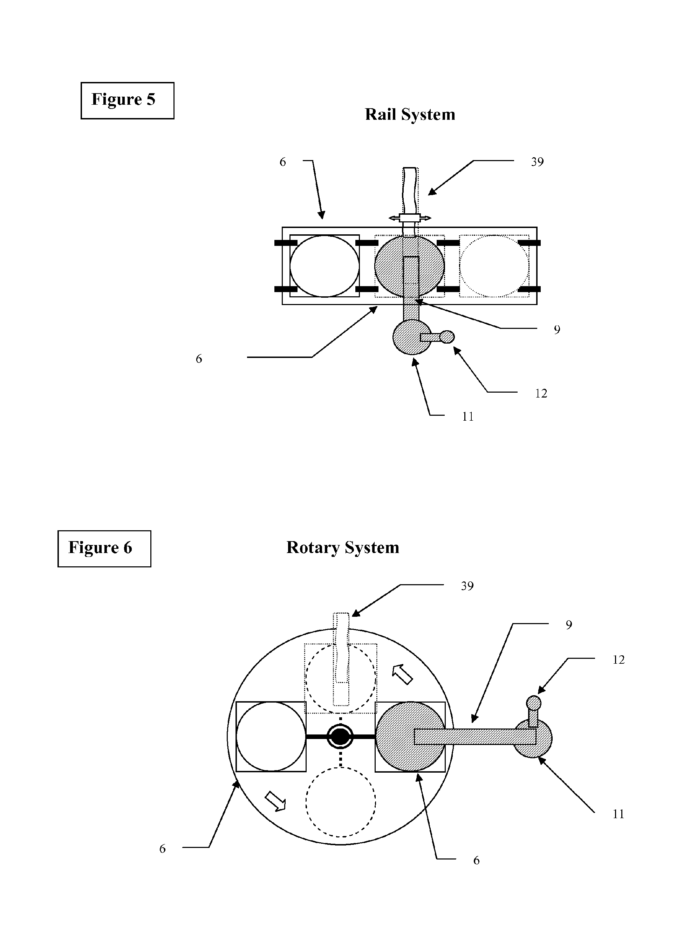

- Figure 5 shows an apparatus, useable together with the apparatus shown in Figure 1, for efficiently filling and emptying the apparatus of the present invention in a serial batch process (rail system);
- Figure 6 shows an apparatus, useable together with the apparatus shown in Figure 1, for efficiently filling and emptying the apparatus of the present invention in a serial batch process (rotary system); and

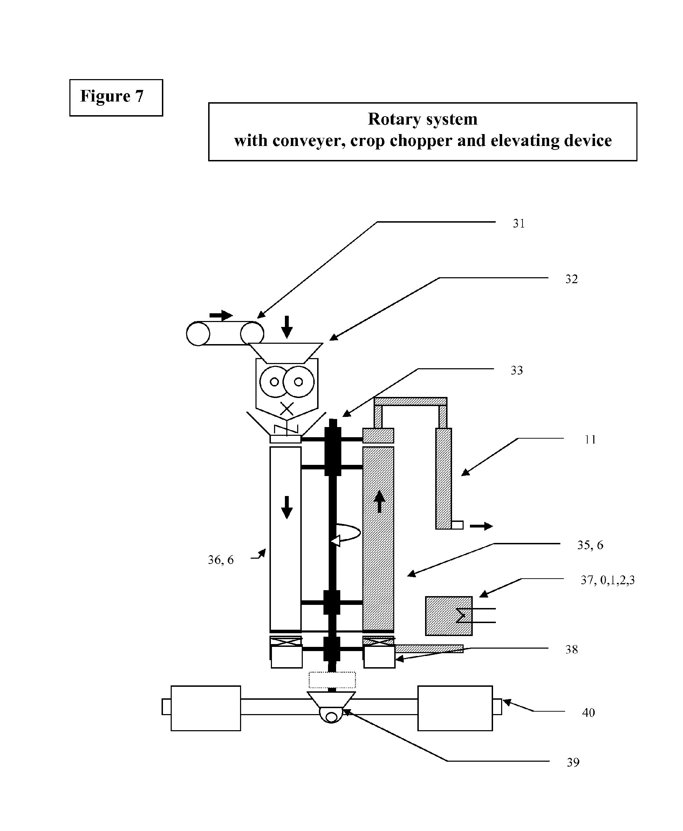

- Figure 7 shows an apparatus, useable together with the apparatus shown in Figure 1 (rotary system), for a gentle comminution of plant material immediately before filling it into the apparatus of the present invention.

All Figures, as far as they show the device of the invention or parts thereof, are sketches which are not necessarily drawn by scale but show the principle of the device or of its parts; the relative configuration of the parts combining to the overall apparatus used may be varied, and relative sizes and measurements of distances and sizes may be varied, as long as the principal construction is maintained as shown and described in detail in the specification.

The process according to the invention comprises the steps of
- contacting an amount of a plant or of plants and/or a part or parts of such a plant or of plants, previously measured and arranged in the form layers in a distillation still having a ratio of diameter (D) to height (H) in the range of from 1 : 25 to 1 : 2, with steam having a flow rate in the range of from 0.1 to 0.5 cm/s at a pressure in the range of slight sub-atmospheric pressure to slight supra-atmospheric pressure;
- condensing water to the plant(s) and/or part(s) of said plant(s) by said contact of the steam to the relatively cooler plant(s) and/or part(s) of said plant(s);
- dissolving and/or suspending one or several plant ingredient(s) from said plant(s) and/or part(s) of said plant(s) by means of the water condensed;
- heating the solution and/or suspension comprising water and one or several plant ingredient(s) thus formed on said plant(s) and/or part(s) of said plant(s) by means of following amounts of steam, whereby said water and/or said dissolved or suspended plant ingredient(s) is/are evaporated at least partly;
- condensing the steam thus formed to relatively cooler plant(s) and/or part(s) of said plant(s) arranged in a downstream flow direction of the steam and further plant ingredient(s) is/are dissolved or suspended, respectively, in water from steam condensed to said plant(s) and/or part(s) of said plant(s);
- repeating the previous two steps, until the solution or suspension, respectively, containing said plant ingredient(s) is migrated through said plant(s) and/or part(s) of said plant(s) by alternating steps of evaporation and condensation;
- driving the solution or suspension of plant ingredients removed from said layers of plant(s) and/or part(s) of said plant(s) by further steam via a head of the distillation still, an ascending pipe and a distillation bridge to a condenser arranged in the downstream direction of flow of said steam, whereby the head of the distillation still, the ascending pipe and the distillation bridge are provided, on their inner walls contacting the rising steam, with a surface having concave recesses distributed over their whole surfaces;
- condensing the solution or suspension of said plant ingredient(s) and water in said condenser; and
- separating the condensate into water and one or several plant ingredient(s).

In preferred embodiments of the invention, said concave recesses have a diameter in the range of from 2 to 5 mm (millimetres). In further preferred embodiments, said concave recesses have a distance from each other in the range of from 5 to 10 mm. In accordance with the invention, the diameter of the concave recesses and their distance to each other are measured from the outer wall on one side to the outer wall on the other side of such a recess (diameter) or from one outer wall of such a recess to the outer wall of the neighbouring recess (distance).

In further preferred embodiments of the invention, the diameters of the concave recesses and their distances to each other may be different, at funnel-shaped transitions at the entrances or exits of diameters, from the diameters and distances of the remaining concave recesses; preferably the former are larger than the latter.

In further preferred embodiments, said recesses are arranged in a triangular arrangement with the aim of a closest-possible positioning thereof to each other. Such a triangular arrangement of the recesses, particularly in those areas where one compartment of the apparatus is transitioning into another compartment, surprisingly promotes a smooth condensation of the steam containing plant ingredients. As a result, the plant ingredients are obtained in a higher purity, compared to distillation processes of the prior art, and their water content is substantially reduced: A clear condensate-product is obtained.

In accordance with the invention, one plant ingredient is, or several plant ingredients are, obtained from one plant or from several plants and/or from one part or from several (optionally different) parts of such a plant or of such plants, whereby said plant(s) and/or said part(s) of plant(s) is/are in any arbitrary condition. To give just a few examples: There may be used one living plant or several living plants, or there may be used one part or several parts of such a plant or of such plants, in cases where the plant ingredients are best or preferably obtained from such living plant(s) or one or several part(s) of such (a) living plant(s). In accordance with the invention, freshly harvested plants or parts of such plants, respectively, or withered plants or parts of such plants, respectively, are particularly preferred. Moreover, it is possible to use fresh and withered plants or parts of such plants together, if this is considered necessary in practice or appropriate in a single case or is promising. In accordance with the invention, there may be used whole plants or single parts thereof, as, for example, leaves, fruits, stems, seeds, blossoms and/or roots. It is also possible to use the whole plant together with parts of a plant, or to use several types of parts of plants together; an example is the use of stem of a plant or of plants and of leaves of a plant or of plants.

The fresh and/or the withered plant material 7 is comminuted (if desired or required, respectively) to such an extent that it can be filled into the distillation apparatus, for example into the distillation still 6 of the apparatus of the present invention, without any efforts.

The plant material 7 is exactly weighted and is filled into said distillation still 6, after removing the head 9 of said distillation still, by forming layers of plants and/or parts such plants. In accordance with the present invention, it is preferred that the plant material 7 is arranged in non-compacted and uniform layers without that compacted areas or hollow spaces are generated. By such an arrangement, a uniform flow of the steam through the layers of plant material 7 may be achieved. In addition, in subsequent steps of dissolving or suspending, respectively, said at least one plant ingredient, a uniform process of condensing, dissolving, suspending and evaporating may occur.

The height of the plant material layers, i.e. of the packing of plants and/or parts of such plants, depends upon the specific material, its degree of comminution, its water content, the amount of plant ingredient(s) to be dissolved or suspended, the steam flow rate to be adjusted later and, optionally, upon further parameters, however, the height may be determent by a person skilled in this field within a few orienting experiments.

After filling in the plant material 7, the head 9 of the distillation still is mounted again to the top of the distillation still 6 and is closed in such a way that no water steam can escape there from at the connection point.

In a particularly preferred embodiment, the plant material 7 is arranged on a bottom screen 4b provided with holes of a suitable size, which will be described below with respect to its structure and function.

In preferred embodiment of the process according to the invention, the plant material and/or parts of plants, freshly harvested and/or withered and optionally comminuted, if desired, is/are filled into the distillation still 6, for example a cylinder-shaped distillation still 6, as a lose fill, together with one or several mineral additives. The term "mineral additives", as used in the present claims and in the specification of the invention means such mineral substances (in most cases of inorganic origin), which are capable to improve, in the cause of a distillation process, for example a carrier vapour distillation process, to improve the transport properties and/or dissolution properties of the media used in said process. There may be used one mineral additive, or there may be used several mineral additives. If several mineral additives are used, those may be comprised by one of the subsequently described groups, or they may be derived from several, optionally from all of the subsequently mentioned groups of mineral additives.

In a further preferred embodiment of the process according to the invention, the plant material and/or the parts of plants, freshly harvested and/or withered and, optionally, comminuted, if desired, is supplied to the distillation still 6 in the form of a lose fill, together with one or several mineral additive(s), preferable with one or several mineral additive(s) selected from the group consisting of silicates, preferable selected from the group comprising vermiculite and montmorillonite; and/or selected from the group consisting of volcanic rock, particularly preferable from the group comprising perlite, and/or selected from the group consisting of fibrous fossile plant materials, particularly preferred from the group comprising xylite or lignite, the latter being obtained by mining woody brown coal. When using one or several (preferable several) mineral additives from the groups mentioned above, utmost preferred when using any mixture of vermiculite, perlite and xylite/lignite, the course of a distillation can substantially be improved. The improvement comprises preventing compacted clusters of plant material from being formed, which are flooded completely by water vapour/ steam, and preventing foam from being generated, which preferable occurs when treating parts of plants containing starch. Thus, in this manner it can be prevented that condensed water prematurely fills cavities, which fact would result into a pressure increase beyond the limits introduced by the weight of the plant fill. Surprisingly, by this measure, the result could substantially be improved, e.g. the yield of highly pure flavour-active plant ingredients. In other words: The allowable maximum amount of water vapour flowing through the distillation still largely depends upon the size of cavities within the plant material as well as upon the fact whether these cavities are free of water. As a further advantage, when using soft plant parts or plant material having a less stable or mellow material matrix, the use of mineral additives contributes to achieving larger heights, thereby contributing to an effective improvement of the distillation plants' capacity.

The amounts of such mineral additives are not restricted in accordance with the invention, as is their relative ratio. A person skilled in the field of distilling plant ingredients may easily determine, in accordance with his/her experience and by means of few orienting preliminary trials, the weights amount of said one or said several mineral additive(s), relative to the plant material. For example, and without restricting the invention, the amounts of mineral additives, relative to the total weight of the plant materials, is 10 to 50 % by weight (of all mineral additives), for example 10 to 50 % by weight vermiculite, 10 to 50 % by weight perlite and/or 10 to 50 % by weight xylite/lignite.

For the distillation process, water vapour (steam) is generated in a *per se* known manner, preferable from desalted or de-ionised water. The generation of steam preferable occurs via one or several external steam generators 2, which are provided with conventional energy sources 1 for generating heat energy and for heating the water within said steam generator 2. Moreover, the steam generator(s) is/are provided with a funnel 0 for filling the steam generator(s) with water and for purposes of aeration. The steam generator(s) is/are connected, via said funnel 0, to the surrounding atmosphere. The steam generated is fed to the bottom layer of plant material 7 arranged in said distillation still 6 via a direct steam feed line 3, particularly preferred at the bottom end of said distillation still 6 below the layer of plant material 7, and the steam is supplied in an upward direction.

The flow velocity of the water vapour/steam from the steam generator 2 via said directed steam supply 3 into the distillation still 6 and, hence, through the layers of plant material 7 is, in accordance with the invention, in a range of from 0.1 to 0.5 cm/s. It is a further preferred embodiment of the invention that the flow velocity of the steam is within a range of from 0.1 to 0.3 cm/s. Furthermore, it is preferred in accordance with the invention that the pressure is within a range of from 1.013 ± 0.1 bar in the course of the proceedings, i.e. regularly at atmospheric pressure or slightly below or slightly above atmospheric pressure.

In accordance with the invention, the water vapour (steam) generated in said steam generator 2 is fed, via said direct steam feed line 3, to said distillation still 6. In a more preferred embodiment of the process according to the invention, the steam is fed, via said direct steam feed line 3, to a steam pressure release space 4 located below said distillation still 6. The steam flows into said steam pressure release space 4 in a high speed. However, the speed is reduced due to the fact that the relatively narrow tube of the direct steam feed line 3 is opening downstream to a larger space 4. This space is filled with water vapour which, at least in part, is condensed to walls of said space 4, which walls are thereby heated so that a condensation of the steam becomes more difficult in course of the process. However, under suitable process conditions, said condensation results in a depletion of said steam from water ("dry steam"), which fact may be advantageous in cases where the parts of the plant to be treated are humid. Water condensed from the steam in said steam pressure release space 4 is guided to a reflux steam trap 5 arranged below the steam pressure release space 4, as far as it is not entrained to the flow of steam.

As soon as the whole steam pressure release space 4 is filled with water vapour/steam, the steam is driven upwards by further flowing steam and reaches the bottom screen 4b separating the upper parts of the steam pressure release space 4 from the distillation still 6. The layers of plant material(s) 7, from which the plant ingredient(s) is/are to be removed, are arranged on said bottom screen 4b which has, in addition to supporting the plant material, the further function of distributing the steam flowing upwards across the whole cross section of said distillation still 6, thereby preventing single "channels" of flowing steam through the layers of plant material 7 from being generated, while other areas of said layers are not passed by said water vapour/steam.

In the preferable embodiment of the invention already described above, this object of having an optimum distribution of the steam flowing through the plant material is supported by the measure that the fill 7 of plant material is mixed with one or more several mineral additives, when it is loaded into the distillation still 6. The presence of said mineral additive(s) also promotes a uniform flow of vapour through the fill and prevents "clusters" of plant material not passed by said steam from being generated. In the prior art, the latter problem had repeatedly resulted into an incomplete exploitation of the plant materials and into a reduction of the plant ingredient(s) yield.

As soon as the steam has passed the bottom screen 4b in an upward direction, it is contacted with the plant material 7 being arranged on said bottom screen 4b. As long as the plant material 7 has a temperature lower than the temperature of the steam, the steam condenses to the plant material 7. One or more several plant ingredient(s) is/are removed from said plant(s) and/or part(s) of such plant(s) by such a direct contact of water vapour/steam to said plant(s) or part(s) of said plant(s), respectively, either by forming an aqueous solution of said one or several plant ingredient(s) or by forming an aqueous suspension thereof.

Such a removal of the plant ingredient(s) from the plant material is conducted without destroying the cells of plant(s) or parts of plants. Without wanting to be bound to a theory, it is assumed that the contains of the plant cells containing a sensual oils allow that the oil(s) is/are removed from said cells by diffusion. The steam humidifies the plant material (being at a low temperature, at the beginning) with condensed water, makes the cell walls (previously air-dried most of the cases) swelling, i.e. opens and enlarges capillary slots, which fill with water. Only in a stage swollen by water, the essential oil components bound to the innermost structures of the cell pass from the inner cell volume to the steam passing by. Such a slow transport (decelerating the distillation) is, hence, mediated by the swelling water being at a boiling temperature. Convective streams play a minor role only within the capillary structures. Hence, the main mechanism is a transport by pure diffusion. The cell walls of the plant material thereby separated the oil being in a stage of emulsion of the cell fluid from the steam flow passing by. The transport of essential oil molecules to the surface of the plant(s) or part(s) of plant(s) is/are conducted only through the water capillaries or - in accordance with most recent research results - through ion channels. Hydrophilic contents of the cell are dissolved in water condensed to the surfaces of said plant(s) or part(s) of said plant(s). Lipophilic cell contents are suspended in the water condensed to the surface of said plant or parts of said plants. Moreover, the steam releases the heat stored therein in a latent way to the device parts or to the plant materials (plants or parts of said plants) in contact therewith. Hence, these parts of the device and the plant materials are maintained at a temperature in the range of close to 100 °C, for example 99.5 °C, i.e. close to the boiling point of water.

A chimney-like column (according to German Industrial Standard (DIN) 4705: "Feuerungstechnische Berechnung von Schornsteinabmessungen, Oktober 1993), wherein the saturated steam flows into an upright direction thermodynamically like smoke and condenses only to the plants, in a condensation zone promoting towards the top of the column and simultaneously extracts plant ingredients, is particularly preferred in accordance with the invention. By using such a column, cold air bubbles (dead zones) cause by too low flow velocities may be prevented from occurring, which would result into a premature condensation and, thus, to an undesired "cold" water extraction. By effecting a turbulent diffusion, the vapour may develop optimum dissolution properties at the plant cell.

The amount of steam, humidity of steam and velocity of flow of the steam are preferable adjusted by the manufacturer of the plant for each type, and these parameters automatically adapt to the nature of the plant material treated. Such adaptation may prevent a break of the cyclone-type vapour turbulence, developing thermodynamically, by overheating (overpressure) and a too dry fill material from occurring. Nevertheless, the fill material should be at least witheringly humid or freshly humid and uniformly loose when being filled in. The device provides optimum solubility properties of water or of steam, respectively to the plant cell efficiently and makes it possible thereby to provide an authentic essential oil having high purity and completeness.

By using the device according to the invention for the process of a thermodynamic water vapour/steam extraction, a sufficiently rapid diffusion of the components from the plant cells and an uninhibited thermodynamic rise within the column are guaranteed in a first step still a turbulent flow, caused by a large diameter of the column and by the fill. This leads to an intensified diffusion of the steam through the column; steam reaches directly the secretory cells of the plants or plant parts. Thereby, the shortest possible distillation period and a gentle distillation of the components which partly are unstable may be guaranteed. The extraction is conducted in split seconds (rise of 7 seconds per cm of filled plant material). Once the steam arrives at the surface of the plant material supplied, the extractive phase is terminated.

Subsequently, the distillation phase (in the narrow sense) starts, wherein the evaporation of the extracted substances is effected. In the course of the distillation, the extracted substances, together with the steam, are transferred from the column 6 via the uprising tube into the condenser 11. In accordance with the invention, at least the head 9 of the distillation still 6, the uprising tube 20 as well as the distillation bridge 21 are provided with a surface on their walls showing towards the rising steam which has regularly arranged concave recesses on their hole surface, preferably in a triangle arrangement, without restricting the invention thereto. The concave recesses have a preferred diameter of 2 to 5 mm and a preferred distance to each other of 5 to 10 mm. The diameters and distances of said recesses, at the trumpet-shaped transitions at the entrance and exit, may be different from the diameters and distances of the remaining recesses the remaining recesses, preferable may be larger. Due to the presence of such recesses, the steam flow is guided on micro-turbulences through the head 9 of the distillation still, through the rising pipe 20 and through the distillation bridge 21.

In a preferred embodiment of the invention, such recesses which may resample to partial bodies of a sphere, e.g. hemispheres or spherical segments, lower below the lowest point of the area surrounding the recesses by an amount which is within a range of 0.5 mm to 2 mm, preferable about 1 mm. In other words: compared to the regular inner wall of the head 9 of the distillation still, uprising pipe 20 and bridge 21, the recesses have a maximum depth of 0.5 mm to 2 mm, preferable of 1 mm. Without wanting to be bound to a theory relating to the functioning of the invention, it is assumed that a surface designed as above creates micro turbulences (assumed diameter: only a few micrometers). Based on the design of the surface of the rising transition pipe having a narrowed diameter, the former turbulent flow changes into a speedy laminar flow. This prevents microscopic turbulences from being generated. Such turbulences had resulted, in the prior art repeatedly, into a generation of cold air bubbles at the inner surface of these parte of the device. Such cold air bubbles reduce the efficiency of the steam when transporting plant ingredients from said plants or parts of plants, respectively, into the direction towards the condenser 11.

In accordance with a further preferred embodiment of the invention, the axes of the uprising pipe following downstream (water vapour stream and product stream) of the head 9 of the distillation still 6 and of the subsequently following distillation bridge 21 have an angle, relative to each other, within a range of 120 ° to 140 °, more preferred an angle within a range of 125 ° to 135 °. Maintaining such an angle allows a loss-free flow of the water vapour/steam-product steam and contributes to a clear separation step of water and plant ingredient. The water content of the product is reduced significantly.

Surprisingly, this effect is increased, if - in another preferred embodiment of the invention - the distillation still 6 of the device according to the invention, and even more preferred also the head 9 of the distillation still 6, the uprising pipe 20 and the distillation bridge 21 singly or all together are provided with an isolation or with isolations against loss of heat. Even more preferred, such an isolation is applied to the outer surface of these parts. The term "singly or together" as used in the present specification and claims, means that a heat-isolating material (or several different heat-isolating materials) are applied to one of said parts of the plant or to several or all of said parts of the plants, preferable on their outer surface. When several materials are used, these materials may be different or may be distinguished form each other with respect to their capability of heat isolation. For reasons of process economy, one certain heat isolating material is used. Such materials are known to a skilled person due to his/her skilled knowledge and may, for example, be rock wool or mineral wool.

In the phase of distilling, i. e. in the process phase after the extraction step, the extracted substances are separated from the water in the distillation space, in a continuous process, and are again combined with it. In an area further downstream, they finally reach the condenser 11, the cross section of which is widened, compared to the transfer tube. Again, the desired cyclone-type vapour turbulences are formed here, which result into a good surface condensation in a particularly preferred embodiment. In this manner, periodical stream conditions with spontaneous evaporations and condensed water at wrong places where it may develop to explosion-type so-called "steam hammers", as they are known from steam plants in general and distillation plants especially (as known from the prior art) are avoided. The solutions or suspensions, respectively, separate at least partly into water and plant ingredient(s) one last time. The plant ingredients are supplied, via the condensate oil exit 14 after measurement or continuously during the process via the condensate oil exit/outlet 19, to a device for receiving, separating and measuring the amount of water and plant ingredient(s) phases.

The high-performance condenser 11 which is supplied, in accordance with the invention, with the mixture of water vapour / steam and a dissolved or suspended plant ingredient or dissolved or suspended plant ingredients, preferably is a ball condenser 11 comprising in accordance with the invention at least three balls, preferably more balls (for example 5 or 6 balls). The condenser 11 is closed and (with respect to flowing steam condensing to liquids) arranged in a descending direction. When using such a balloon condenser 11, a careful, gentle and stepwise condensation of the vapour components can be achieved, and no components of the vapour are lost in the course of the condensation step.

The step of distillation is terminated as soon as no further amount of plant ingredient(s) appears in the device (part) extending from said high performance condenser 11 via the condensate oil removal line 14 to the condensate measuring and separating means 12 or, in an alternative embodiment, as soon as no further condensate flows via the separating vessel 12 and via the scale pipe (measuring pipe) 13 and the condensate oil removal line (outlet) 14 (after batch is closing) to the corresponding parts of the alternative embodiment plant to be collecting water condensate (hydrolate).

It was found surprisingly that the condensate thus isolated is clearer than condensates obtained from plants of the prior art and, hence, have less emulsion-type turbidities, which fact considerably improves the durability.

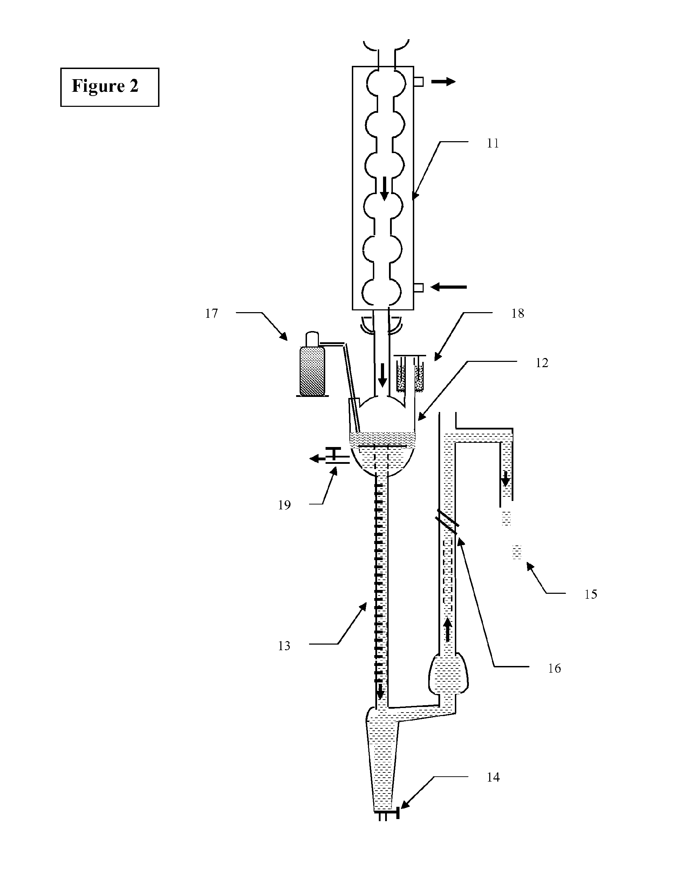

In alternative embodiment of the invention, a suitable apparatus for which is shown in Figure 2 and which is described in detail below, one condensed plant ingredient, or several condensed plant ingredients, and optionally also larger amounts of condensed water, leaving the ball condenser 11 at its lower end and passing the ball-and-socket connection is/are supplied, by a flow in a vertical direction, to a receiving vessel 12, which preferably is of spherical or cylindrical shape. In the receiving vessel 12, the flow of fluids (plant ingredient(s) and water and emulsions of both) comes to a rest, thereby allowing the components of the fluids to separate, if separatable in such an environment, from each other. In preferred embodiments, a separation in accordance with the difference in the specific weights is achieved, i. e. lighter components will float up, while heavier components will sink down. In other words: If the plant ingredient(s) contained in the fluid arriving at the receiving vessel 12 is/are of a lower specific weight than water, they will float up as an upper layer, while plant ingredient(s) having a higher specific weight than water will form a layer below the water layer.

In a preferred embodiment of the invention, the content(s) of the receiving vessel 12 may be treated with a protective gas. Suitable protective gases are known to a skilled person and are selected, without restriction, from the group consisting of oxygen-depleted air, pure nitrogen, and noble gases and their mixtures, of which pure nitrogen and argon are most preferred and often used practically. The protective gas(es) may be supplied into the receiving vessel onto the top layer of the fluid (so as to fill the gas space above the fluid(s) more or less completely and thereby replacing the air which may have deleterious influence on the composition of the fluid, in particular on the plant ingredient(s) obtained, e. g. causing decay and/or side reactions). In another preferred embodiment, the protective gas(ses) may be entered into the receiving vessel 12 by means of a tube, for example a glass tube, by bubbling the protective gas into the fluid(s) and through the fluid(s).

In another preferred embodiment, such a supply of gas may achieve a lowering of the temperature of the fluid(s). If, for example, the protective gas is supplied at a temperature below the temperature at which the fluid(s) is/are contained in the receiving vessel 12, e. g. at a temperature < 10 °C or even at a temperature < 5 °C, the fluid(s) are slowly, but effectively cooled by (a) the fact that the gas passing the fluid will take up some of the fluids' heat, and/or (b) the fact that some of the fluids' volatile components will evaporate and, by evaporation, heat will be consumed, thereby lowering the temperature. Of course, a skilled person will have to consider whether any volatile component actually is one of the plant components desired and will have to take measures, in such a case, that its/their yield is not lowered in an undesired way due to its evaporation and loss in the gas phase.

If the plant ingredient(s) contained in the fluid coming to a rest in the receiving vessel 12 have a specific weight lighter than water, they will, as mentioned above, form a liquid layer on top of the water phase. Hence, the water will flow down to the communicating vessels 16 and will leave the plant ingredient(s) in the receiving vessel 12. The plant ingredient(s) may be drained from the receiving vessel 12 by means of the drain cock 19, particularly in cases where their amount is relatively large. In other cases (e. g. of minor amounts of plant ingredient(s)), the water may be removed via the communicating vessels 16 and the water overfall 15, while the (lighter) plant ingredient(s) are measured in the scale pipe 13 and the drained from the system. In the same way, plant ingredients heavier in specific weight than water will sink down from the receiving vessel 12 towards the lowest point of the system, forming a layer below the water layer. This/these plant ingredient(s) is/are drained by means of an outlet 14 at the bottom of the communication vessels 16. High value hydrolate may additionally obtained via the water overfall 15.

In another preferred embodiment of the invention, which is employed in particular in cases where plant ingredient(s) are to be recovered which are extremely sensitive to oxidation and, eventually, even generate undesired oxidation-caused off-flavours at elevated temperatures in the presence of oxygen of the air, the distillation still 6, the uprising tube 20, the bridge 21 and/or the condenser 11, i.e. basically either single parts of the plant or the whole apparatus/plant which is used to conduct the present process, may be flooded with a protective gas, or a protective gas may be filled in partially. Suitable protective gases are well known to a skilled person, and use may be made, for example, of O₂-depleted air, nitrogen (including ultra-pure nitrogen), noble gases as, for example, argon and other known protective gases and their mixtures with the above-mentioned gases. The selection of the protective gas(es) may be made by a skilled person on the basis of his/her knowledge in this technical field, and in single cases, a skilled person may determine a suitable protective gas as a result of a simple preliminary experiment.

The location where the protective gas is filled into the device or plant may be determined easily in accordance with known criteria of suitability. In accordance with the invention, a preferred possibility of feeding protective gas(es) into the device or plant is allocation downstream of the condenser and upstream of the main recovery or collection vessel for the product. This allows particularly the product obtained and separated from the water (i. e. the pure plant ingredient(s)) to be maintained under a direct "cushion" of protective gas.

In the following, the device for yielding plant ingredients according to the invention is described in details. The reference numerals used are the same as used above, and reference is made to the Figures. In cases where the present description above already contains the information about the function and the advantages of single parts of the device, a repeating description of such functions and advantages is omitted below.

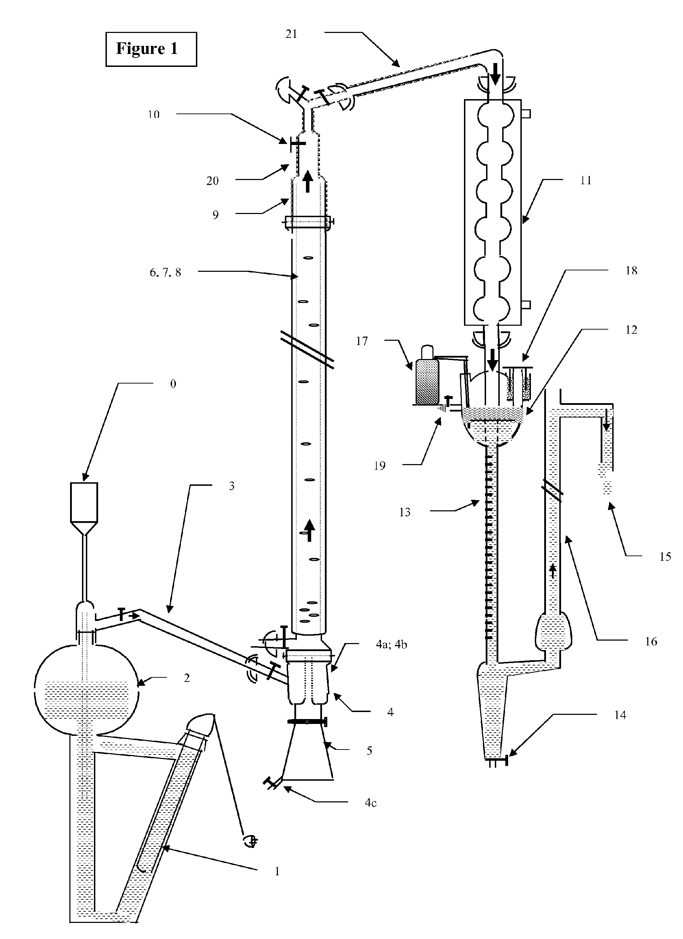

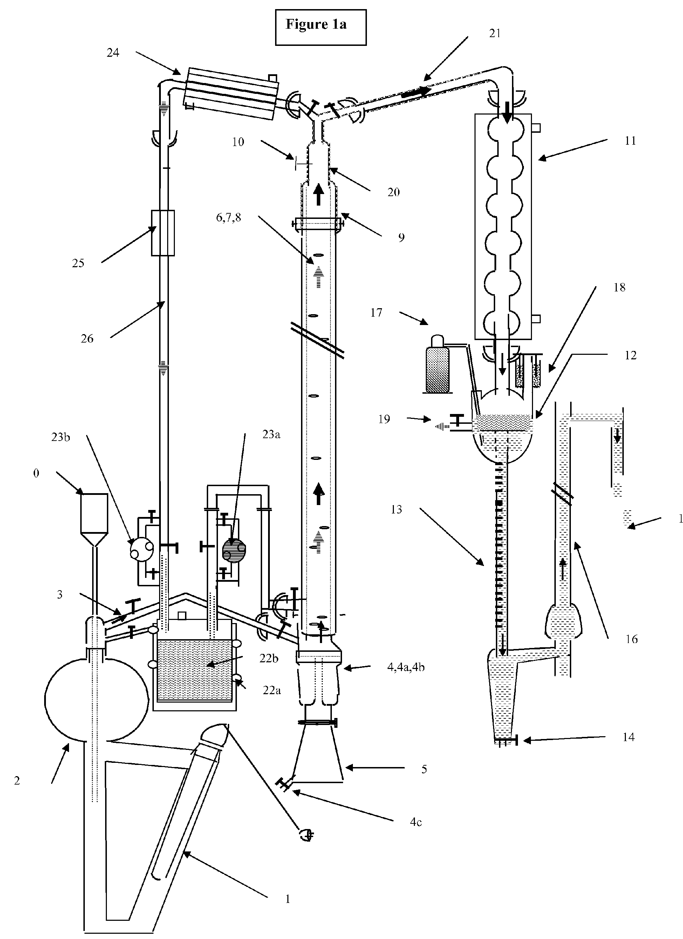

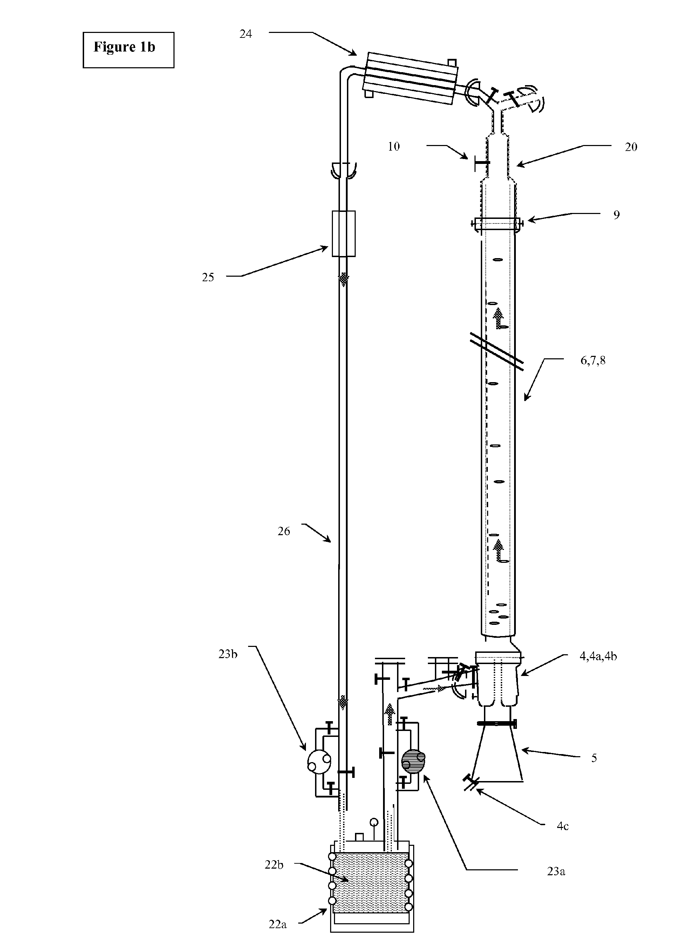

In accordance with the invention, the device (Figure 1) for yielding one or more than one plant ingredient from a plant or plants and/or a part or parts of such a plant/plants by steam distillation comprises a steam generation unit 2, a distillation still 6, a head 9 of said distillation still provided with a thermometer 10, a condenser 11 and a collection device or vessel 12 for collecting said yield of plant ingredient(s). The distillation still 6 is (preferably, but not exclusively) shaped as a cylinder and has, in a preferred embodiment, a ratio of diameter (D) to height (H) of 1 : 25 to 1 : 2, even more preferred of 1 : 16 to 1 : 3.5, for example of 1 : 12 for operating the device under technical conditions or in the laboratory or of 1 : (at least 2) for operating the device in the fields.

As already described above, the generation of water vapour or steam may occur in a manner known per se from the prior art. Also the step of feeding the water vapour/steam generated into the device may be conducted in a per se known and conventional manner. A skilled person knows a great number of devices for generating steam, particularly at atmospheric pressure, in addition to devices to feed said steam into devices designed for special purposes.

It is preferred in accordance with the invention that an external steam generator 2 of the type shown in Figure 1 as well as a direct steam feed line 3 is employed, as also shown in Figure 1. Both means are subsequently described in detail.

A steam generator 2 employed preferably in accordance with the present invention has a usual energy source 1 by which heat energy is applied to the water directly or indirectly whereby steam is generated. The energy source may be, for example, a heating jacket filled with a heating agent. In a mobile device according to the invention, the energy source may also be a heating muff or a heating rod. The latter devices are operated electrically and heat the water through the walls of the device. Of course, other energy sources may be employed as, for example, radiators. In this respect, the present invention is not at all restricted. An electrically operated ceramic rod heating the water, preferably desalted or de-ionized water, in a small cross-section of the device, for example in a glass tube connected to the overall water content of the device proved to be effective and is, hence, preferred. By such a heating device, a rapid and efficient heating and, simultaneously, a convection effected by the temperature differences within the steam generator 2, is assured.

Via a filling funnel 0 for filling water into the device, the steam generator 2 is connected to the environment. Thereby, it is ensured that the device or plant is operated substantially at a pressure corresponding to the pressure of the environment. However, this is not compulsory: There may be applied pressures in the range of low sub-atmospheric pressure to low supra-atmospheric pressure.

The steam generated in the above-described way in an efficient and energy-saving way is fed to the distillation still, preferably via in isolated direct steam feed line 3. Said direct steam feed line 3 may be separated from the distillation still by means of a shut-off valve.

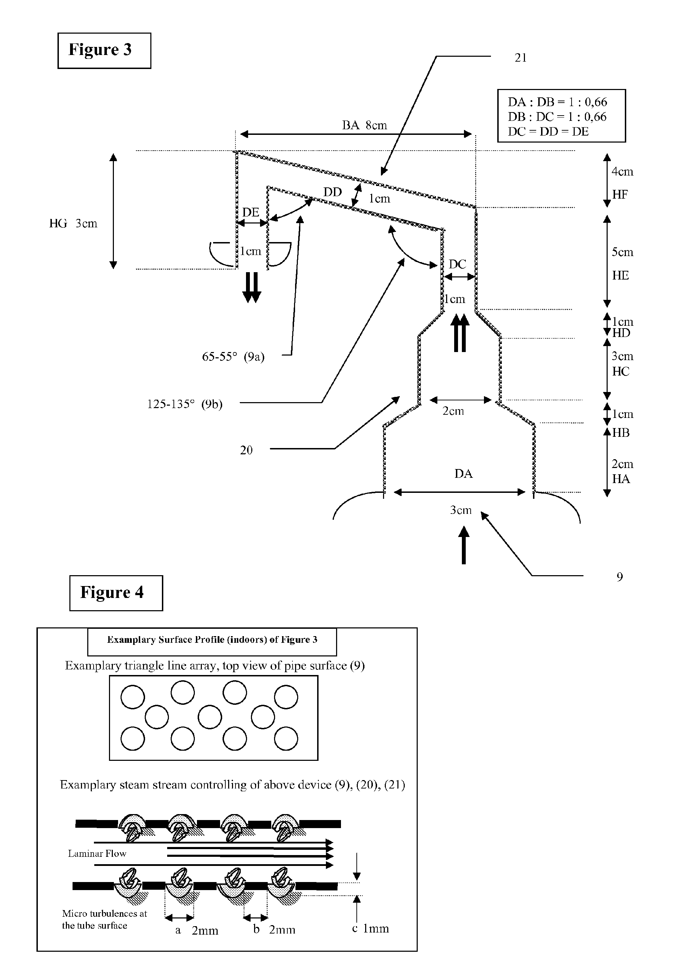

Moreover, it is preferred in accordance with the invention that the cylindrical distillation still 6 is provided at its bottom end with a means 4 for releasing the pressure of the steam and a means 4b for controlling the flow rate. Such a means may be, in a particularly preferred embodiment of the invention, a steam pressure release space 4 as shown in detail in Figure 4. Preferably, such space has a circular cross-section and is arranged concentrically to the axis of the distillation still 6 below said distillation still 6. The steam enters the steam pressure release space 4 via an inlet connected to the direct steam feed line 3 which has a relatively narrow cross-section and allows the steam to flow rapidly, and the steam pressure release space 4 is filled by steam successively. A pressure release occurs due to the fact that the steam pressure release space has a considerably larger cross-section than the direct steam feed line 3. Steam condensing to the walls of the steam pressure release space 4 transfers the heat contained therein to the walls and heats them successively. Condensate which is not heated and another time evaporated by further steam and, thereby, driven into the direction of the steam flow (i.e. upwards), flows downwards via a back flow condensate (reflux steam trap) outlet 4c arranged in the bottom part of the steam pressure release space into a back flow condensate vessel 5 arranged at the lower end of the steam pressure release space and connected via a suitable connection (e. g. via a ball-and-socket joint).

Further steam flows into the general flow direction (i. e. upwards) in the steam pressure release space 4 and reaches an impingement plate 4a arranged concentrically to the axes of the steam pressure release space 4 and the distillation still 6 in said steam pressure release space 4. The impingement plate has the function to guide the steam to the outer walls and to thereby effect that a mixture of water and plant ingredients running down from the distillation still 6 evaporates another time and is driven upwards into the distillation still 6 again. It is prevented thereby that a proportion of the product corresponding to said mixture trickling down is lost in recovering the plant ingredient(s) and trickles down into the back flow condensate (reflux steam trap) vessel 5. Moreover, the impingement plate 4a effects an excellent distribution of the steam in the whole upper part of the steam pressure release space 4 and, subsequently, a very uniform flow of the steam to the bottom screen 4b.

As already described above, the bottom screen 4b serves not only as a support for the layers of plants and/or parts of such plants, but also to a uniform distribution of the steam across the whole cross-section of the cylindrical distillation still 6.

A preferred cylindrical distillation still 6 with isolation (vacuum, mineral wool) has a ratio of diameter (D) to height (H) in a certain range as indicated above. It turned out in the course of extensive experiments that an efficient and high yield extraction of plant ingredients cannot be achieved with a ratio D/H below said value. In the same way, a ratio D/H substantially exceeding the values mentioned-above will not result into a successful extraction of plant ingredients. Without wanting to be bound to a specific theory for this effect which could not yet be elucidated in detail, it is assumed that a value of the ratio D/H in the above-specified range has an effect on the flowing steam which is comparable to the effect of a chimney having a good "flue". The value of D/H is, of course, dependent upon several parameters as, for example, the density of the packing of the plant material 7, the flow rate of the steam, the pressure and, of course, also upon the type of plant ingredients to be extracted. However, if the value is within the above-specified range, an efficient, gentle and complete recovery of the plant ingredients can surprisingly be achieved in a much shorter time than possible up to now.

The distillation still 6 and, as indicated above, also further parts of the device/plant as, for example, the head 9 of the distillation still 6 and/or the uprising tube 20 and/or the bridge 21, is/are isolated against heat losses on its/their outer side in a preferred embodiment of the invention. When isolating the distillation still and further parts of the device/plant, preferably a material is used which impairs the equilibrium steps of successive and repeated steps of condensation and evaporation of the water/steam and of the plant ingredient(s) as little as possible. Namely, it was found that a particularly good yield of plant ingredients, in particular of the desired - partly temperature-sensitive - substances can be achieved without the formation of undesired side products and decay products, if the isolation of the distillation still guarantees undisturbed condensation, evaporation and exchange processes. This is due, at least in part, to the fact that a good isolation impedes a condensation of the water/steam including the plant ingredients contained therein at the outer wall due to a better temperature profile, and losses due to a running-down of the material are prevented from occurring.

In accordance with the invention, the head 9 of the distillation still 6, the uprising tube 20 and the bridge 21 are provided on their inner wall facing to the uprising steam with a surface which has regularly arranged concave recesses over the whole surface. Preferably, but not restricting the invention, the recesses are applied on the inner side of the head 9 of the distillation still 6, the uprising tube 20 and the bridge 21 in a triangular arrangement with the aim of a closest-possible positioning thereof to each other. Such a triangular arrangement of the recesses, particularly in those areas where one compartment of the apparatus is transitioning into another compartment, surprisingly promotes a smooth condensation of the steam containing plant ingredients. As a result, the plant ingredients are obtained in a higher purity, compared to distillation processes of the prior art, and their water content is substantially reduced: A clear condensate-product is obtained.

Said recesses preferably have a diameter in the range of 2 to 5 mm and, even more preferably, have a distance to each other of between 5 to 10 mm. Even more preferably, the diameters and distances of the recesses may be larger at the trumpet-shaped transfer areas of the inlets and outlets of the devices than at the remaining walls of the devices. Thereby, the vapour stream is guided on micro-turbulences through the head 9 of the distillation still 6, the uprising tube 20 and the bridge 21. The advantages connected to this preferred embodiment were explained above already in connection to the process according to the invention.

In another preferred embodiment of the invention, the axis of the uprising tube 20 and the axis of the bridge 21 are in an angle of from 120 to 140 ° to each other, more preferred in an angle of from 125 to 135 °.

Furthermore, in accordance with the invention, the condenser 11, to which the steam (generated as described above) containing the plant ingredients is supplied is a balloon condenser 11 having at least three balloons, preferably having at least five balloons. Preferably, the balloon condenser 11 is closed (due to the possible sensitivity of the plant ingredients obtained) and, in accordance with another embodiment of the invention, is arranged in a falling arrangement, i. e. the vapour/steam flows from the bridge 21 in a downwardly falling direction.

In a downstream direction behind the condenser 11, the condensate comprising water and plant ingredients is supplied to a receiving vessel 12, for receiving the plant ingredient(s) obtained. The collecting vessel 12 may have the usual shape, as it is known for receiving sensitive substances to a person skilled in this technical field. In addition, a skilled person, when selecting the collecting vessel 12, will be capable to consider that the substances recovered and obtained will at least in part be light-sensitive substances and/or substances possibly being degraded under the influence of light. Hence, on a case-by-case basis, closed collecting vessels or light-protected collecting vessels or cooled collecting vessels will have to be provided. In addition, it turned out to be advantageous to provide a collecting vessel allowing recovering different fractions of the plant ingredients to be obtained, for example a collecting vessel having different receiving vessels to be changed in the course of the process. Such collecting vessels are known to a skilled person, too.

In accordance with the invention, it turned out to be particularly advantageous using a device wherein the receiving vessel 12 for recovering the plant ingredient(s) obtained is a device consisting of a settling vessel having a level control 16, a condensed water exit 15, a condensed oil exit 14 including an oil measuring tube 13 and an exit tap 17, wherein the settling vessel having a level control 16, the condensed water exit 15 and the condensed oil exit 14 including the oil measuring tube 13 are connected to each other in the form of a communicating tube system. A preferred device of this type is exemplarily shown in Figure 3. In a particularly preferred embodiment, more than one of such devices may be used side by side or in sequence for different fractions of the condensate.

The device 12 consists of an arrangement of three hollow bodies having substantially the shape of tubes and being provided with additional means (which are explained in detail below). These tubes serve to receiving the mixture of condensed steam (= water) and condensed plant ingredients dissolved in the water. The hollow bodies are connected at their respective bottom parts via a connecting line or connecting tube.

The first tube considered in the flow direction of the condensate mixture recovered, is arranged immediately below the high performance condenser and has, at its upper end, a tube portion having a relatively large diameter. The condensate mixture drops or preferably runs into said tube along the wall. The mixture is settled therein, i.e. a substantially slow flow of the liquid(s) occurs therein. In the case of the formation of a liquid mixture in the condensate, the components (more or less immiscible which each other) may already be separated from each other in such a preferred receiving vessel, for example on the basis of their density: In accordance with the experience, the plant ingredients to be extracted have a lower density than water and are found in the upper part of the liquid while the water flows downward within the extended part of this tube. Between the upper part of this tube having a larger diameter, compared to the intermediate part of the same tube, and the lower part of said tube also having a larger diameter (for example a portion of the tube having the shape of a sphere), there is found a portion of the tube having a relatively small cross-section. The measuring tube 13 is found in this portion of the receiving vessel according to the invention and has a graduation known for the purpose of volume measurement. The volume amounts of the components of the condensate may be measured by this measuring tube after collecting and lowering the overfall 15.

The intermediate portion of the receiving vessel 12 (preferred in accordance with the invention) also consists of a tube-shaped hollow body for a level control. At its lower part, this tube is relatively largely extended in its cross-section in order to receive large volume amounts of condensate, for example large amounts of water in the starting phase of the process. From this portion of the tube having an enlarged cross-section and belonging to the receiving vessel 12, a third tube is branching off which is arranged at a place downstream to the entry of the condensate and serves the disposal of the condensed water.

The receiving vessel preferred in accordance with the invention has an exit for condensed water at a suitable place 15 and has - at a place different from the above-mentioned place - a continuing outlet 19, preferable for a bigger amount of the components of the condensate which contain the plant ingredients to be extracted or even consist thereof, or after measurement an discontinuing outlet 14, or an outlet of plant ingredients there are heavier in density than water.

The device according to the invention may comprise further means known to a skilled person and suitable for the purpose of recovering plant ingredients from plants and/or parts of such plants. The means can be adapted to specific purposes (e.g. the recovery of specific plant ingredients) and are selected by a skilled person in accordance with usual criteria.

Furthermore, in accordance with preferred embodiments of the invention, it is possible to make use of a device including a receiving vessel 12, the detailed construction of which may be derived from Figure 2. In Figure 2, those parts of the device where the water generation, distillation and/or extraction steps are carried out are omitted for convenience; these parts of the device may have the shape and construction as described above and shown exemplarily in the other Figures or may have any conventional shape and construction or may be a combination of both.

In Figure 2, the ball condenser 11 is shown which, at its top end, is connected to the distillation bridge 21. At its bottom end, the condenser 11 is connected, preferably is connected by an exactly vertical connection, in a usual way, for example by a ball-and-socket connection, to a receiving vessel 12. In a preferred embodiment, the receiving vessel 12 has a spherical or cylindrical shape and its volume, albeit not restricted, as may be appreciated by a skilled person, is between 10 ml and 100 ml in devices which are used in a laboratory scale of plant ingredient yielding. Such a spherical or cylindrical receiving vessel 12 serves the (at least intermediate) uptake of one plant ingredient or more than one plant ingredient produced and condensed in the condenser 11 located above the receiving vessel 12, as well as of additional amounts of water used in the process of the invention for distilling and/or extracting plant ingredient(s) from the plants treated in the device.

The receiving vessel, in further preferred embodiments of the invention, may be provided with a flask 17 for inert gas supply to the receiving vessel. As a skilled person in this field knows, some plant ingredients sensitive to decay or deterioration/adulteration by environmental influences (presence of oxygen, too high temperatures) may be prevented from such decay/deterioration/adulteration by retaining them under oxygen-free and/or lower temperature conditions. One (conventionally known) way to achieve this is the supply of or treatment with protective gases. Such protective gases, in particularly preferred embodiments, may be oxygen-depleted air, pure nitrogen or noble gases, argon being preferred as the noble gas, optionally in combination with nitrogen or O₂-depleted air. Even more preferred, such gases may be provided at a temperature being below the temperature level of the liquid(s) when they enter the receiving vessel 12, for example (without restriction) below 10 °C, even more preferred below 5 °C. The protective (optionally low temperature) gas may be supplied to the receiving vessel by blowing it into the vessel onto the top liquid surface where it may overlay the liquid (if the gas is heavier than air), while a built-up of increased pressure is prevented by providing an additional siphon trap 18 allowing gas to escape from said receiving vessel. Alternatively, such protective gas may be supplied by blowing it, by means of a suitable tube (e. g. a glass tube) below the surface of the liquid contained in said receiving vessel 12 at a certain point of time. Thereby the protective gas is allowed to (at least partially) dissolve in the liquid and to move, by bubbling, through the liquid, thereby preventing any deleterious side reaction or decay reaction in the products and, simultaneously, entraining some of the water or of other volatile components and transporting it into the gas space above the liquid and, finally, through the siphon trap 18, out of the receiving vessel 12. In addition, a cooling effect can easily be achieved by blowing in cooled protective gas.

In another preferred embodiment which may be provided together with the protective gas supply flask 17 or may be provided alone is a drain cock 19. The drain cock 19 may be provided at any location of the (preferably spherical) receiving vessel 12. Particularly preferred, however, is a drain cock 19 in the lower half or at the bottom side of the receiving vessel 12. The drain cock 19 at the bottom of the receiving vessel 12 allows a removal or draining of a fluid or liquid from the receiving vessel, preferably of one plant ingredient or more than one plant ingredient yielded from the process of the invention, particularly preferably of a plant ingredient or of several plant ingredients having a specific weight lighter that the water condensed.

The receiving vessel 12, while connected at its top end to the connection to the condenser 11, is connected at its lower end to, and is in flow communication with, communicating vessels 16 which are adjustable in height for leveling the liquid (plant ingredient plus optional amounts of water) surface, allowing a measurement of the amount(s) of plant ingredient(s) obtained and removing water separated from the condensate contained in the receiving vessel 12.

In a preferred embodiment of the device according to the invention, the communicating vessels 16 may comprise a scale pipe 13 allowing to measure the amount of components (either water or yielded plant ingredient(s)) contained in the liquid passing the scale pipe 13.

The communication vessels 16 may further comprise, I another preferred embodiment of the invention, an outlet 14 for heavy components of the condensate, for example for a plant ingredient or for several plant ingredients the specific weight of which is heavier than water; this component/these components may flow to the bottom part of the communication vessels where they can be drained by opening the outlet 14.

Another preferred embodiment of the device comprises, as a component or part of the communicating vessels 16, a water overfall 15 suitable for collecting high value hydrolate separately from condensed water and from plant ingredients. Moreover, it is preferred in accordance with the present invention for the overall device that transitions are created, at the device' parts where a change of the free flow diameter occurs. Such transitions should offer the lowest-possible resistance to the steam flow and product flow. Surprisingly, it turned out to be advantageous to provide trumpet-shaped transitions at those areas. This can exemplarily be derived from Figures 1a and 1b and Figure 4. The result is a remarkably better flow of the product stream and a product having a considerably higher product purity. In particular, it may be achieved that the product is substantially free of water and the oil content in the hydrolate (at condensed water after outlet 15) is lower.

In accordance with a further preferred embodiment of the invention, the device so far described to be used for yielding plant ingredients by distillation (for example by carrier steam distillation), only, is used for a combined process of the type wherein a separation, by distillation, of plant ingredients from their mother plant(s) from a part or parts of such mother plant(s), on the one hand (for example by carrier steam distillation), and/or a separation, by extraction, of plant ingredients from their mother plant(s) or from parts of such mother plants, on the other hand, can be carried out. There may be applied one distillation step or several distillation steps, and/or there may be applied one extraction step or several extraction steps. In accordance with the invention, several separate distillation and/or extraction steps may be conducted alternatively. Such separate distillation and/or extraction separation processes may be carried out alternatively or successively. A distillation process step before conducting an extraction with solvents (for example with ethanol) results into a better chemical opening of the plant oil secretion cells within the plant(s) or part(s) of plants by swelling. When using oil-containing parts of plants (e.g. seeds of black cumin or nutmeg, a separation by using solvents before conducting a distillation increases the yield of the essential oil(s). Moreover, when using rose flower leaves, an extraction with a solvent or with solvents or a steam distillation process or a combination of both may be conducted.

In accordance with a further embodiment of the invention, the above-described device for yielding plant ingredients, alternatively or successively by distillation and/or extraction comprises means for changing the device parts from distillation to extraction or from extraction to distillation by turning on a turn-table means or by shifting on a track means. In the case mentioned above first, the distillation means and/or the extraction means, optionally together with their connected downstream device part(s), is/are arranged on a turntable in a predetermined order. They are capable of being disconnected from the ready-to-use device by raising or lowering them, of being exchanged by the respective device planned to be used next by turning the turntable, and of being connected again to the ready-to-use device by raising or lowering them. By these steps, the overall distillation and/or extraction device may be prepared for the next process step. Alternatively, a linear arrangement of such means is possible. In such a case, the exchange of device parts or means is not conducted by turning, but is conducted by shifting said means, for example on a usual track system known to a skilled person for such purposes.

A device designed like described before does not only allow a combined distillation/extraction operation of the plant, but also allows the discontinuous, or batch-type, operation of a distillation plant or of an extraction plant or of a combined distillation/extraction plant: Desired distillation units or extraction units or units of both types may be arranged on a turntable system (to be operated by turning) or on a shifting or track system (to be operated by shifting) in a desired order and may be connected to the overall plant one after the other or simultaneously. To give just one example, such turn or shift process steps may be conducted hydraulically or pneumatically, preferably. In a further preferred embodiment of the device of the invention, this allows for a batch-type operation in such a manner that one distillation unit and/or one extraction unit is operated under distillation and/or extraction conditions, while the respective other one is emptied, cleaned and/or newly filled with plant material, and is subsequently connected to the plant and, thereby, takes the place of the previous distillation unit and/or extraction unit in the course of the distillation and/or extraction process.

The device according to the invention as well as the process of the invention as described above may be applied to the following purposes in an advantageous manner:
- Cost-saving tests of device parts in a scale different from the industrial scale;
- investment decisions concerning a practical field distillation plant;
- search/screening for new plants, particularly plants containing steam-evaporable plant ingredients as, for example, aromatic substances and fragrance substances;
- conducting series experiments;
- conducting reproducible experiments with exactly maintaining certain test conditions;
- experiments for selecting the best time for harvesting certain plants;
- the exact check of yields of plant ingredients to be expected, and also of the composition of plant ingredients to be expected;
- experiments serving a selection of specific plant genotypes;
- a qualitative and quantitative treatment of small amounts of plant material;
- a combined distillation and extraction operation of the device when yielding plant ingredients;
- a discontinuous, or batch-type operation of the device when yielding plant ingredients from a plant or from plants or from part(s) of plant(s).

The advantages of the process according to the invention as well as of the device according to the invention as described above are apparent: In contrast to existing processes and devices, the energy applied is used in an optimum manner; energy savings are in a range of 35 to 45 %. In addition, the device, by allowing different parts and means of the device to be combined, allows a quick change of the operation alternatives by rapidly changing different means against each other, as well as a rapid exchange of used plant material (already subjected to distillation and/or extraction step(s)) against fresh plant material to be subjected to an appropriate treatment.

In the prior art, industrial plant material distillation plants are filled and emptied either continuously in a process line or discontinuously in a batch-type manner by opening or closing a lid or a drop bottom. A turning means having a hydraulic raising and closing mechanism is not known from the prior art.

When applying short distillation times (below one hour) in a batch-type process, extended set-up times will occur and are determinative for the effectiveness of the overall process. The present invention provides an effective filling and discharging device, which allows for shortest-possible changes of the device parts. A rapid filling and discharging procedure makes the work during the distillation and extraction processes easier and promotes the occurrence of a large number of process cycles. Easy filling is effected by means of a funnel placed at the head of the device below the comminuting device. The plant material to be subjected to distillation/extraction falls down from the funnel into the distillation still in a loose and uniform manner.

The bottom sieve removable from the lower part of distillation still by lowering it makes free the drop bottom of the distillation still completely, with the aim of allowing the distillation still to release the exhausted plant material from the still in one step after a side turn. A vessel prepared for said purpose or a screw conveyor removes the material away from the working area. After the release of the plant material, the distillation still is returned to the original position, the bottom sieve actuated hydraulically and including the steam inlet is lifted again, and the distillation still is closed sealingly at its upper and lower ends automatically by a silicon rubber sealing rind, for example.

By lowering and raising of the columns arranged in a circular arrangement, a removal of insert baskets or their tilting, as it was observed in the prior art, is no longer required. Hence, the set up times and periods for changing the devices are shorter than 5 minutes, and 10 to 20 distillation processes possibly may be preformed.

The time for recovering the plant ingredients (distillation time) is not only independent of the amount of plant material filled into the distillation still, but is also considerably shorter than with known processes: Due to a consequent use of all thermodynamic possibilities, the distillation times are below one hour, in some examples in the range of 20 to 30 minutes, compared to two to three hours in the prior art. Hence, the process according to the present invention is quicker than conventional processes by a factor of 3 to 6, depending upon the course of the process and the embodiment of the device.

The conditions of the test device can be converted or scaled up to a technical device without any problems and may also be converted to a plant of an industrial scale. No adaptation of operation and process parameters to a change of the dimension of the device is necessary.

In the course of the process or when using the device according to the invention, the desired products, are recovered in high yield and purity without side products or decay products detrimental to the quality. The only side products are the residual parts of plants which where contacted with water, and water itself. Hence, the vegetable waste is no chemistry waste (in contrast to parts of plants in accordance with the prior art which where contacted with solvents). Hence, the process is ecologically compatible in each respect.

The invention is further exemplified by the following examples. The examples are preferred embodiments of the invention and should not be considered to restrict the invention.

### Example 1

### Lemon balm oil:

Selected plants of lemon balm grown up organically were harvested at a predetermined harvesting time speedily and were cut with an air cutter (field harvester) to an appropriate size without pressing the plant material. The plant material was transported to the distillation still and was directly supplied to the still soon after arrival without pressing the material, loosely and under its own weight.

Steam amount default according to plant design and size secure automatically adaptation to the material supplied (10 kg). After 30 minutes, the essential oil is obtained completely (100 ml) and settles in the separation vessel in the form of a clear layer. It is further processed from there under a protective gas similarly speedily (not rapidly, but carefully and with the necessary speed).

In this way, an essential oil having a high citral content (47.22 % of neral/geranial), a low content of skin-compatible citronellal (0.51 %) and rich of sesquiterpenes (20.91 % of β-caryophyllene, 10.75 % of germacrene)was obtained from lemon balm having the chemotype "Sommerol" ("summer oil") and harvested in June. The flavour was dry and bloomy, and the oil contains cosmetically effective components and has good medical virus-inhibiting and bactericide properties. In contrast to that, the essential oil obtained from the plant material having the chemotype "Spätsommeröl" ("late summer oil") harvested in August has a larger content of citronellal and limonene (10.35 %) and has a flavour more lemon-like and fresh and has an even higher content of citral of up to 72.74 %.

### Example 2

### Carrot seed oil:

Selected carrier plants of carrot seeds grown up organically were harvested in a dry and ripe (oxide-red/red-brown) condition by using a harvester-thresher and were freshly ground coarsely above the upper entrance opening of the distillation still (roller mill 0.1 to 1 mm particle size). The coarsely ground plant material (50 kg) was supplied directly to the distillation still and was distilled speedily.

Also in this example, the steam supplied according to the plant design and size automatically adapted exactly to the conditions existing in the column. No further adaptation was necessary, neither due to plant species nor part of a plant, nor density, nor wetness nor fill amount. Hence, in the course of the real extraction phase (first 10 minutes), no restraint and no interference was occurring. Already after 1 hour, a clear essential oil distillate (250 ml) could be obtained from the separation vessel. This essential oil was further processed under a layer of protection gas (e.g. argon). A content of carotol of up to 50 % and of daucol of up to 2 % could be determined in the essential oil.

### Example 3

### Coriander seed oil:

Selected carrier plants of coriander seeds grown up organically were harvested in a dry and ripe (red-brown) condition by using a mobile harvester-thresher and were freshly ground coarsely above the upper entrance opening of the distillation still (roller mill 0.2 to 2 mm particle size). The coarsely ground plant material (50 kg) was supplied directly to the distillation still and was distilled speedily.

Also in this example, the steam supplied according to plant design and size automatically adapted exactly to the conditions existing in the column. No further adaptation was necessary, neither due to the plant species nor part of a plant, nor density, nor wetness nor fill amount. Hence, in the course of the real extraction phase (first 15 minutes), no restraint and no interference was occurring. Already after 1 hour, a clear essential oil distillate (300 ml) could be obtained from the separation vessel. This essential oil was further processed under a layer of protection gas (e.g. argon). A content of linalool of up to 75 % and coriandrine (furanocoumarines) were found in the essential oil.

### Example 4

### Helichrysum oil:

Selected plants of immortelle grown up organically was harvested at a predetermined harvesting time speedily and was cut with an air cutter (field harvester) to an appropriate size of the blossom shoots without pressing the plant material. The plant material was transported to the distillation still in small lots and was directly supplied to the still soon after arrival without pressing the material, loosely and under its own weight.

Also in this example, the steam supplied according to plant design and size automatically adapted exactly to the conditions existing in the column. No further adaptation was necessary, neither due to plant species nor part of a plant, nor density, nor wetness nor fill amount. (Supplied material: 12 kg). After approx. 45 minutes, the essential oil was obtained completely (25 ml) and settled in the separation vessel in the form of a clear layer. It is further processed from there under a protective gas speedily.

In this way, an immortelle oil having a high sesquiterpene content and ester content (content of neryl acetate exceeding 55 %) could be obtained.

### Example 5

A composition containing 500 Grams (g) of cananga blossoms was uniformly mixed with 50 g of xylite/lignite with stirring, and the mixture was supplied to the distillation still immediately thereafter loosely and freely falling, and was subjected to distillation. The material supplied remained at indispensable steam movement rate completely and yielded a clear essential oil condensate having a high content of aromatically active oxidized monoterpenes and sesquiterpenes.

As is known from the prior art, if the essential oil condensate is very clear, this is an evidence for less or low or even zero water content in it and, consequently, for less oil losses in hydrolate (condensed water). If a cloudy condensate is obtained, there will be a major amount of essential oil in water-emulsified form that is at least partly lost with the hydrolate.

### Example 6

A composition containing 500 g of carrot seeds (finely ground) was uniformly mixed with 100 g of chopped xylite with stirring, and the mixture was supplied to the distillation still immediately thereafter loosely and freely falling, and was subjected to distillation. The material supplied remained at indispensable steam movement rate completely and yielded a clear, fine-aromatic essential oil condensate having a high content of carotol.

### Example 7

A composition of 1000 g of Atlas Cedar recalcitrant compounds (saw dust) was mixed with 100 g of vermiculite uniformly under stirring, and the mixture was filled into the distillation still immediately thereafter loosely and in a free-falling condition and was then subjected to distillation. Since the wooden material did not absorb any condensed water, the natural reflux is absorbed by the vermiculite material and is again evaporated when further steam is supplied.

The material supplied remained at indispensable steam movement rate completely and yielded a clear, fine-aromatic essential oil condensate having a high clearance, purity and rare trace components.

### Example 8

A composition of 1000 g of roots of *angelica* (freshly cut slowly by a slitter into slices) was mixed with 500 g of vermiculite uniformly under stirring, and the mixture was filled into the distillation still immediately thereafter loosely and in a free-falling condition and was then subjected to distillation. Since the root material was swelling strongly due to a release of plant-own water after having been contacted by the steam and thereby looses its stability, a structure stability was provided by the vermiculite. The steam kept at its indispensable movement rate kept its outstanding properties as a solvent, and no obstructive reflux and no bulk packing occurred. The essential oil thus obtained had no turbidity, what was a sign of a lower water content and of a high quality standard.

The invention is explained by the Examples given, but can, by no way, considered to be restricted to the examples, only.

Summarizing the above described invention, the invention generally relates to an accelerate process for yielding one or several plant ingredient(s) from one or several plant(s) and/or from one or several part(s) of such plants, wherein
- an amount of a plant or of plants and/or of a part or parts of such a plant or of such plants, previously measured and arranged in the form layers in a distillation still having a ratio of diameter (D) to height (H) in the range of from 1 : 25 to 1 : 2, is contacted with steam having a flow rate in the range of from 0.1 to 0.5 cm/s at a pressure in the range of slight sub-atmospheric pressure to slight supra-atmospheric pressure;
- water is condensed to the plant(s) and/or part(s) of said plant(s) by said contact of the steam to the relatively cooler plant(s) and/or part(s) of said plant(s);
- one or several plant ingredient(s) is dissolved and/or suspended from said plant(s) and/or part(s) of said plant(s) by means of the water condensed;
- the solution and/or suspension comprising water and one or several plant ingredient(s) thus formed on said plant(s) and/or part(s) of said plant(s) is heated by means of following amounts of steam, whereby said water and/or said dissolved or suspended plant ingredient(s) is/are evaporated at least partly;
- the steam thus formed is condensed to relatively cooler plant(s) and/or part(s) of said plant(s) arranged in a downstream flow direction of the steam and further plant ingredient(s) is/are dissolved or suspended, respectively, in water from steam condensed to said plant(s) and/or part(s) of said plant(s);
- the previous two steps are repeated, until the solution or suspension, respectively, containing said plant ingredient(s) is migrated through said plant(s) and/or part(s) of said plant(s) by alternating steps of evaporation and condensation;
- the solution or suspension of plant ingredients removed from said layers of plant(s) and/or part(s) of said plant(s) is driven by further steam via a head of the distillation still, an ascending pipe and a distillation bridge to a condenser arranged in the downstream direction of flow of said steam, whereby the head of the distillation still, the ascending pipe and the distillation bridge are provided, on their inner walls contacting the rising steam, with a surface having concave recesses distributed over their whole surfaces, whereby the flow of steam is guided through the head of the distillation still, the ascending pipe and the bridge on micro-turbulences;
- the solution or suspension of said plant ingredient(s) and water is condensed in said condenser; and
- the condensate is separated into water and one or several plant ingredient(s).

In one preferred embodiment of the invention, the process comprises that the process pressure is in a range of 1.013 ± 0.1 bar.

Another preferred embodiment of the invention comprises a process, wherein the steam is generated externally and is supplied to the layer of plant(s) and/or part(s) of plant(s) from the lower end of the layer in an uprising flow direction.

Another preferred embodiment of the invention comprises a process, wherein the steam flow speed is in a range of from 0.1 to 0.3 cm/s.

Another preferred embodiment of the invention comprises a process, wherein wherein a steamy/vaporous solution of the plant ingredient(s) is formed from one or several of the steam-soluble plant ingredient(s) and water, and/or an aqueous suspension of the plant ingredient(s) is formed from one or several of the water-insoluble plant ingredient(s) and water.

Another preferred embodiment of the invention comprises a process, wherein one or several mineral additive(s ) is/are added to the layer of plant(s) and/or part(s) of plant(s), preferably wherein one or several mineral additive(s) is/are added in a uniform distribution, more preferably wherein one or several mineral additives is/are added which are selected from the group consisting of silicates, volcanic minerals and fibrous fossile plant materials, more preferably wherein one or several mineral additives are added which are selected from the group consisting of montmorillonite, vermiculite, perlites and xylite/lignite, and most preferred wherein one or several of the above mineral additives are added in an amount of from 10 to 50 % by weight, based on the overall weight of the fill.

Another preferred embodiment of the invention comprises a process, wherein the water condensing to the plant(s) and/or to the part(s) of plant(s) drives out the one or several plant ingredient(s) by diffusion from the cells containing the plant ingredient(s).

Another preferred embodiment of the invention comprises a process, wherein the water condensing to the plant(s) and/or to the part(s) of plant(s) is maintained at a temperature close to the boiling point by heat transported by successional steam.

Another preferred embodiment of the invention comprises a process, wherein the plant(s) or parts of plant(s) are selected from the group consisting of whole plants, leaves of plants, fruits of plants, stems of plants, seeds of plants, blossoms of plants and roots of plants.

Another preferred embodiment of the invention comprises a process, wherein plant ingredients are yielded from fresh plant(s) and/or part(s) of plant(s) and/or from withered plant(s) and/or part(s) of plant(s).

Another preferred embodiment of the invention comprises a process, wherein the recesses on the inner surface of the head of the distillation still, the ascending pipe and the bridge have a diameter in the range of from 2 to 5 mm and/or have a distance to each other in the range of from 5 to 10 mm.

The invention also relates to an apparatus for yielding one or several plant ingredient(s) from a plant or from plants or from a part of a plant or from parts of a plant or of plants by steam/water vapour distillation, said apparatus comprising a steam generation unit (2), a distillation still (6), a head (9) of the distillation still (6) provided with a thermometer (10), a condenser (11) and a receiving vessel (12) for collecting the plant ingredient(s) obtained; wherein
- said distillation still (6) has a ratio of diameter (D) to height (H) in the range of from 1 : 25 to 1 : 2;
- said head (9) of the distillation still (6) is connected to the condenser (11) via an ascending pipe (20) and a bridge (21), wherein the head (9) of the distillation still (6), the ascending pipe and the bridge (21) are provided on their inner walls facing the uprising steam with a surface having recesses, whereby the flow of steam is guided through the head (9) of the distillation still (6), the ascending pipe (20) and the bridge (21) on micro-turbulences; and
- the condenser (11) is a balloon condenser (11) having arranged at least three balloons in a descending direction.

A preferred embodiment of the invention relates to an apparatus, wherein the recesses on the inner surface of the head (9) of the distillation still (6), the ascending pipe (20) and the bridge (21) have a diameter in the range of from 2 to 5 mm and/or have a distance to each other in the range of from 5 to 10 mm and/or are arranged in a triangular arrangement.

Another preferred embodiment of the invention relates to an apparatus, wherein the steam generator (2) is an external steam generator having a direct steam supply via a supply pipe (3) into the cylinder-shaped distillation still (6) from its bottom end.

Another preferred embodiment of the invention relates to an apparatus, wherein the distillation still (6) has a sphere shape or has a cylinder shape (said cylinder having a round, triangle, quadrangle or multi-angle diameter) or has a cone shape and is provided at its bottom end with a means (4) for relieving the pressure of the steam and with a means (4b) for controlling the flow speed.

Another preferred embodiment of the invention relates to an apparatus, wherein the means (4b) for controlling the flow speed is a sieve plate (4b) located at the bottom end of the distillation still (6).

Another preferred embodiment of the invention relates to an apparatus, wherein the axes of the ascending pipe (20) and of the bridge (21) are arranged in an angle being within a range of from 120 ° to 140 °, preferably in an angle being within a range of from 125 ° to 135 °.

Another preferred embodiment of the invention relates to an apparatus, wherein the distillation still (6) and preferably also the head (9) of the distillation still (6), the ascending pipe (20) and the bridge (21) singly or all together is/are provided with an isolation against a loss of heat, preferably on its/their outer side(s).

Another preferred embodiment of the invention relates to an apparatus, wherein the receiving vessel (12) for collecting the plant ingredient(s) obtained is an arrangement consisting of a settling vessel having a level control (16), a condensed water exit (15), a condensed oil exit (14) and (19) including an oil measuring tube (13) and an exit tap (14), wherein the settling vessel having a level control (16), the condensed water exit (15) and the condensed oil exit (14) and (19) including the oil measuring tube (13) are connected to each other in the form of a communicating tube system.

Another preferred embodiment of the invention relates to an apparatus, wherein the apparatus may be provided with a protecting gas, preferably wherein the apparatus may be provided with a protecting gas in the area of the condenser (11) and/or in the area of the collecting vessel (12), more preferably wherein the apparatus may be provided with a protecting gas in the area downstream of the condenser (11).

Another preferred embodiment of the invention relates to an apparatus, wherein the receiving vessel (12) for collecting the plant ingredient(s) obtained comprises a protective gas supply (17) optionally comprising a gas supply tube or capillary, a siphon trap (18), a draincock 19 for draining liquid, a scale pipe (measuring pipe) 13, an outlet (14) at the lower end thereof, communicating vessels (16) adjustable in height for levelling the fluid surface in the receiving vessel (12) and a water overfall (15).

Another preferred embodiment of the invention relates to an apparatus, wherein the apparatus additionally comprises means for a combined alternative or successive operation of the apparatus for yielding plant ingredient(s) by distillation and extraction.

Another preferred embodiment of the invention relates to an apparatus, wherein the means for a combined alternative or successive operation of the apparatus for yielding plant ingredient(s) by distillation and extraction is a means for exchanging the apparatus parts for distillation or extraction by turning on a turn-table means or by shifting on a track means.

Another preferred embodiment of the invention relates to an apparatus, said apparatus further comprising means for exchanging several distillation means and/or extraction means in an alternating distillation and/or extraction operation by exchanging the apparatus parts for distillation and/or for extraction by turning on a turn-table means or by shifting on a track means.

Another preferred embodiment of the invention relates to an apparatus, wherein the exchange of the apparatus parts for a distillation and/or extraction operation is carried out hydraulically or pneumatically.

Another preferred embodiment of the invention relates to an apparatus, said apparatus allowing a batch-wise operation of such a kind that one distillation device is operated in the distillation mode and/or one extraction device is operated in the extraction mode, while the respective other device is emptied, cleaned and/or is newly filled with plant material and subsequently takes the place of the respective other distillation device and/or extraction device in the distillation and/or extraction mode.

## Claims

1. An accelerate process for yielding one or several plant ingredient(s) from one or several plant(s) and/or from one or several part(s) of such plants, wherein
- an amount of a plant or of plants and/or of a part or parts of such a plant or of such plants, previously measured and arranged in the form layers in a distillation still having a ratio of diameter (D) to height (H) in the range of from 1 : 25 to 1 : 2, is contacted with steam having a flow rate in the range of from 0.1 to 0.5 cm/s at a pressure in the range of slight sub-atmospheric pressure to slight supra-atmospheric pressure;
- water is condensed to the plant(s) and/or part(s) of said plant(s) by said contact of the steam to the relatively cooler plant(s) and/or part(s) of said plant(s);
- one or several plant ingredient(s) is dissolved and/or suspended from said plant(s) and/or part(s) of said plant(s) by means of the water condensed;
- the solution and/or suspension comprising water and one or several plant ingredient(s) thus formed on said plant(s) and/or part(s) of said plant(s) is heated by means of following amounts of steam, whereby said water and/or said dissolved or suspended plant ingredient(s) is/are evaporated at least partly;
- the steam thus formed is condensed to relatively cooler plant(s) and/or part(s) of said plant(s) arranged in a downstream flow direction of the steam and further plant ingredient(s) is/are dissolved or suspended, respectively, in water from steam condensed to said plant(s) and/or part(s) of said plant(s);
- the previous two steps are repeated, until the solution or suspension, respectively, containing said plant ingredient(s) is migrated through said plant(s) and/or part(s) of said plant(s) by alternating steps of evaporation and condensation;
- the solution or suspension of plant ingredients removed from said layers of plant(s) and/or part(s) of said plant(s) is driven by further steam via a head of the distillation still, an ascending pipe and a distillation bridge to a condenser arranged in the downstream direction of flow of said steam, whereby the head of the distillation still, the ascending pipe and the distillation bridge are provided, on their inner walls contacting the rising steam, with a surface having concave recesses distributed over their whole surfaces, whereby the flow of steam is guided through the head of the distillation still, the ascending pipe and the bridge on micro-turbulences;
- the solution or suspension of said plant ingredient(s) and water is condensed in said condenser; and
- the condensate is separated into water and one or several plant ingredient(s).

2. The process according to claim 1, wherein the process pressure is in a range of 1.013 ± 0.1 bar, and/or wherein the steam flow speed is in a range of from 0.1 to 0.3 cm/s.

3. The process according to claim 1 or claim 2, wherein the steam is generated externally and is supplied to the layer of plant(s) and/or part(s) of plant(s) from the lower end of the layer in an uprising flow direction.

4. The process according to any of the claims 1 to 3, wherein a steamy/vaporous solution of the plant ingredient(s) is formed from one or several of the steam-soluble plant ingredient(s) and water, and/or an aqueous suspension of the plant ingredient(s) is formed from one or several of the water-insoluble plant ingredient(s) and water, and/or wherein the water condensing to the plant(s) and/or to the part(s) of plant(s) drives out the one or several plant ingredient(s) by diffusion from the cells containing the plant ingredient(s), and/or wherein the water condensing to the plant(s) and/or to the part(s) of plant(s) is maintained at a temperature close to the boiling point by heat transported by successional steam.

5. The process according to any of the claims 1 to 4, wherein one or several mineral additive(s ) is/are added to the layer of plant(s) and/or part(s) of plant(s), preferably wherein one or several mineral additive(s) is/are added in a uniform distribution, more preferably wherein one or several mineral additives is/are added which are selected from the group consisting of silicates, volcanic minerals and fibrous fossile plant materials, more preferably wherein one or several mineral additives are added which are selected from the group consisting of montmorillonite, vermiculite, perlites and xylite/lignite, and most preferred wherein one or several of the above mineral additives are added in an amount of from 10 to 50 % by weight, based on the overall weight of the fill.

6. The process according to any of the claims 1 to 5, wherein the plant(s) or parts of plant(s) are selected from the group consisting of whole plants, leaves of plants, fruits of plants, stems of plants, seeds of plants, blossoms of plants and roots of plants, preferably wherein plant ingredients are yielded from fresh plant(s) and/or part(s) of plant(s) and/or from withered plant(s) and/or part(s) of plant(s).

7. The process according to any of the claims 1 to 6, wherein the recesses on the inner surface of the head of the distillation still, the ascending pipe and the bridge have a diameter in the range of from 2 to 5 mm and/or have a distance to each other in the range of from 5 to 10 mm.

8. An apparatus for yielding one or several plant ingredient(s) from a plant or from plants or from a part of a plant or from parts of a plant or of plants by steam/water vapour distillation, said apparatus comprising a steam generation unit (2), a distillation still (6), a head (9) of the distillation still (6) provided with a thermometer (10), a condenser (11) and a receiving vessel (12) for collecting the plant ingredient(s) obtained; wherein
- said distillation still (6) has a ratio of diameter (D) to height (H) in the range of from 1 : 25 to 1 : 2;
- said head (9) of the distillation still (6) is connected to the condenser (11) via an ascending pipe (20) and a bridge (21), wherein the head (9) of the distillation still (6), the ascending pipe and the bridge (21) are provided on their inner walls facing the uprising steam with a surface having recesses, whereby the flow of steam is guided through the head (9) of the distillation still (6), the ascending pipe (20) and the bridge (21) on micro-turbulences; and
- the condenser (11) is a balloon condenser (11) having arranged at least three balloons in a descending direction.

9. The apparatus according to claim 12, wherein the recesses on the inner surface of the head (9) of the distillation still (6), the ascending pipe (20) and the bridge (21) have a diameter in the range of from 2 to 5 mm and/or have a distance to each other in the range of from 5 to 10 mm and/or are arranged in a triangular arrangement.

10. The apparatus according to any of the claims 8 or 9, wherein the distillation still (6) has a sphere shape or has a cylinder shape (said cylinder having a round, triangle, quadrangle or multi-angle diameter) or has a cone shape and is provided at its bottom end with a means (4) for relieving the pressure of the steam and with a means (4b) for controlling the flow speed, preferably wherein the means (4b) for controlling the flow speed is a sieve plate (4b) located at the bottom end of the distillation still (6).

11. The apparatus according to any of the claims 8 to 10, wherein the axes of the ascending pipe (20) and of the bridge (21) are arranged in an angle being within a range of from 120 ° to 140 °, preferably in an angle being within a range of from 125 ° to 135 °.

12. The apparatus according to any of the claims 8 to 11, wherein the receiving vessel (12) for collecting the plant ingredient(s) obtained is an arrangement consisting of a settling vessel having a level control (16), a condensed water exit (15), a condensed oil exit (14) and (19) including an oil measuring tube (13) and an exit tap (14), wherein the settling vessel having a level control (16), the condensed water exit (15) and the condensed oil exit (14) and (19) including the oil measuring tube (13) are connected to each other in the form of a communicating tube system.

13. The apparatus according to any of the claims 8 to 12, wherein the apparatus may be provided with a protecting gas, preferably wherein the apparatus may be provided with a protecting gas in the area of the condenser (11) and/or in the area of the collecting vessel (12), more preferably wherein the apparatus may be provided with a protecting gas in the area downstream of the condenser (11), preferably wherein the receiving vessel (12) for collecting the plant ingredient(s) obtained comprises a protective gas supply (17) optionally comprising a gas supply tube or capillary, a siphon trap (18), a draincock 19 for draining liquid, a scale pipe (measuring pipe) 13, an outlet (14) at the lower end thereof, communicating vessels (16) adjustable in height for levelling the fluid surface in the receiving vessel (12) and a water overfall (15).

14. The apparatus according to any of the claims 8 to 13, wherein the apparatus additionally comprises means for a combined alternative or successive operation of the apparatus for yielding plant ingredient(s) by distillation and extraction, preferably wherein the means for a combined alternative or successive operation of the apparatus for yielding plant ingredient(s) by distillation and extraction is a means for exchanging the apparatus parts for distillation or extraction by turning on a turn-table means or by shifting on a track means.

15. The apparatus according to any of the claims 8 to 14, further comprising means for exchanging several distillation means and/or extraction means in an alternating distillation and/or extraction operation by exchanging the apparatus parts for distillation and/or for extraction by turning on a turn-table means or by shifting on a track means, preferably wherein the exchange of the apparatus parts for a distillation and/or extraction operation is carried out hydraulically or pneumatically.

16. The apparatus according to claim 14 or claim 15, allowing a batch-wise operation of such a kind that one distillation device is operated in the distillation mode and/or one extraction device is operated in the extraction mode, while the respective other device is emptied, cleaned and/or is newly filled with plant material and subsequently takes the place of the respective other distillation device and/or extraction device in the distillation and/or extraction mode.
